# EUROPEAN PATENT SPECIFICATION

(11) **EP 4 674 707 B1**
(45) Date of publication and mention of the grant of the patent: **11.11.2026**
(21) Application number: 24717272.9
(22) Date of filing: 15.02.2024
(51) Int. Cl.: B60T 8/32, B60T 8/17, B60T 13/66, B60T 17/22

(54) **CONTROL DEVICE AND CONTROL METHOD**
CONTROL DEVICE AND CONTROL METHOD
DISPOSITIF DE COMMANDE ET PROCÉDÉ DE COMMANDE

(30) Priority: 28.02.2023 JP 2023030568
(43) Date of publication of application: 07.01.2026
(73) Proprietor: Robert Bosch GmbH, 70442 Stuttgart (DE)
(72) Inventor: MIYAMOTO, Ryoya, Yokohama-shi, Kanagawa 224-8501 (JP); WATANABE, Takuya, Yokohama-shi, Kanagawa 224-8501 (JP); ONO, Shunsaku, Farmington Hills Michigan, 48331 (US)
(74) Representative: Isarpatent
(86) International application number: PCT/IB2024/051432
(87) International publication number: WO 2024/180417

(56) References cited:
- ES-T3- 2 592 415
- JP-A- 2018 024 324
- US-B2- 10 611 429
- US-B2- 9 637 097

## Description

### Technical Field

This disclosure relates to a control device and a control method capable of suppressing an inappropriate operation of a brake lamp.

### Background Art

A hydraulic pressure control unit that is unit for controlling the pressure of a brake fluid is provided to a straddle-type vehicle such as a motorcycle. For example, as disclosed in PTL 1, anti-lock brake control is performed using the hydraulic pressure control unit. Here, a pressure sensor that detects a pressure of the brake fluid is provided to the hydraulic pressure control unit, and the pressure detection value of the brake fluid detected by the pressure sensor is used to control the hydraulic pressure control unit.

### Citation List

### Patent Literature

PTL 1: JP2018-024324A

### Summary of Invention

### Technical Problem

A brake lamp that lights up in response to a brake operation performed by a rider to call attention to surrounding vehicles is provided to the straddle-type vehicle. The operation of the brake lamp is controlled based on the pressure detection value of the brake fluid. However, the pressure detection value detected by the pressure sensor may deviate from an actual pressure value. Therefore, offset processing which is a correction that subtracts an offset amount from the pressure detection value is performed, and the pressure value used to control the operation of the brake lamp is adjusted.

Here, in a situation where the straddle-type vehicle is parked without being driven for a long period, the amount of deviation of the pressure detection value detected by the pressure sensor from the actual pressure value may change. When the ignition is on in such a situation, for example, even in a case where the offset processing using an offset amount at the previous ignition off is performed, the pressure value used to control the operation of the brake lamp may deviate from the actual pressure value. As a result, for example, a situation where the operation of the brake lamp is inappropriate and contrary to intention, such as the brake lamp lighting up in spite of no brake operation being performed, may occur.

The present invention has been made in view of the above-described problems, and is intended to obtain a control device and a control method capable of suppressing inappropriate operation of a brake lamp.

### Solution to Problem

According to the invention, there is provided a control device that controls an operation of a brake lamp of a straddle-type vehicle, the device including: an acquisition section that acquires a pressure detection value of a brake fluid of the straddle-type vehicle; and a control section that controls the operation of the brake lamp. The control section executes a first control to control the operation of the brake lamp in a pre-launch phase that is a phase from when an ignition of the straddle-type vehicle is on until a launch phase of the straddle-type vehicle starts, based on a first pressure correction value that is a value obtained by subtracting a first offset amount from the pressure detection value. In the first control executed in the pre-launch phase, the first offset amount is determined based on the pressure detection value detected after a previous ignition on.

According to the invention, there is provided a control method for controlling an operation of a brake lamp of a straddle-type vehicle, the method including: causing an acquisition section of a control device to acquire a pressure detection value of a brake fluid of the straddle-type vehicle; and causing a control section of the control device to control the operation of the brake lamp. The control section executes a first control to control the operation of the brake lamp in a pre-launch phase that is a phase from when an ignition of the straddle-type vehicle is on until a launch phase of the straddle-type vehicle starts, based on a first pressure correction value that is a value obtained by subtracting a first offset amount from the pressure detection value. In the first control executed in the pre-launch phase, the first offset amount is determined based on the pressure detection value detected after a previous ignition on.

### Advantageous Effects of Invention

In the control device and the control method according to the invention, the acquisition section of the control device acquires the pressure detection value of the brake fluid of the straddle-type vehicle, and the control section of the control device controls the operation of the brake lamp. The control section executes the first control to control the operation of the brake lamp in the pre-launch phase that is a phase from when the ignition of the straddle-type vehicle is on until the launch phase of the straddle-type vehicle starts, based on the first pressure correction value that is a value obtained by subtracting the first offset amount from the pressure detection value. In the first control executed in the pre-launch phase, the first offset amount is determined based on the pressure detection value detected after the previous ignition on. As a result, the pressure value used to control the operation of the brake lamp can be adjusted based on the pressure detection value detected after the previous ignition on, without waiting for the launch phase of the straddle-type vehicle. Therefore, after the ignition on, the deviation of the pressure value, which is used to control the operation of the brake lamp, from an actual pressure value can be early suppressed, so that an inappropriate operation of the brake lamp can be suppressed.

### Brief Description of Drawings

Fig. 1 is a schematic diagram illustrating a schematic configuration of a straddle-type vehicle according to an embodiment of the invention.
Fig. 2 is a block diagram illustrating one example of a functional configuration of a control device according to the embodiment of the invention.
Fig. 3 is a schematic diagram illustrating a schematic configuration of a brake system of the straddle-type vehicle according to the embodiment of the invention.
Fig. 4 is a diagram illustrating one example of the transition of each state quantity in a comparative example.
Fig. 5 is a flowchart illustrating one example of the flow of a process performed by the control device according to the embodiment of the invention.
Fig. 6 is a diagram illustrating a first example of the transition of each state quantity in the embodiment of the invention.
Fig. 7 is a diagram illustrating a second example of the transition of each state quantity in the embodiment of the invention.
Fig. 8 is a diagram illustrating a third example of the transition of each state quantity in the embodiment of the invention.
Fig. 9 is a diagram illustrating a fourth example of the transition of each state quantity in the embodiment of the invention.

### Description of Embodiments

Hereinafter, a control device and a control method according to the invention will be described with reference to the drawings.

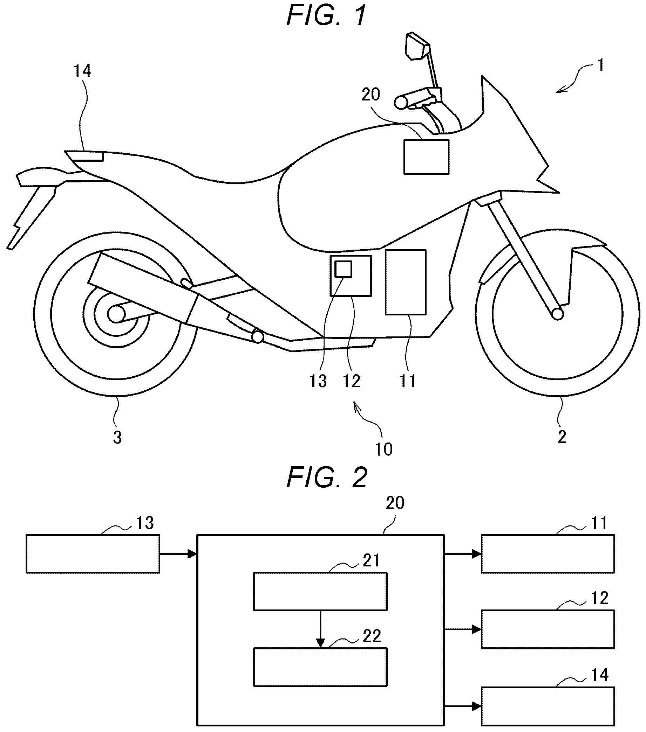

Incidentally, hereinafter, a control device used for a two-wheeled motorcycle will be described (refer to a straddle-type vehicle 1 in Fig. 1); however, a vehicle to be controlled by the control device according to the invention may be a straddle-type vehicle other than a two-wheeled motorcycle. The straddle-type vehicle refers to a vehicle that a rider rides astride. The straddle-type vehicle includes, for example, motorcycles (a motorized two-wheeled vehicle and a motorized three-wheeled vehicle), bicycles, buggies, and the like. The motorcycle includes a vehicle using an engine as a power source, a vehicle using an electric motor as a power source, and the like. The motorcycle includes, for example, a motorbike, a scooter, an electric scooter, and the like. The bicycle refers to a vehicle that can be propelled on a road by a rider's pedaling force applied to pedals. The bicycle includes a regular bicycle, an electric-assisted bicycle, an electric bicycle, and the like.

In addition, hereinafter, a case where an engine (specifically, an engine 11 in Fig. 1 to be described later) is installed as a drive source capable of outputting power to drive a drive wheel will be described; however, a drive source other than an engine (for example, an electric motor) may be installed as the drive source, or a plurality of drive sources may be installed.

In addition, configurations, operations, and the like to be described below are one example, and the control device and the control method according to the invention are not limited to such configurations, operations, and the like.

In addition, hereinafter, the same or similar descriptions are simplified or omitted as appropriate. In addition, in each drawing, for the same or similar members or portions, the assignment of reference signs is omitted or the same reference signs are assigned. In addition, the illustration of detailed structures is simplified or omitted as appropriate.

### <Configuration of straddle-type vehicle>

A configuration of the straddle-type vehicle 1 according to an embodiment of the invention will be described with reference to Figs. 1 to 3.

Fig. 1 is a schematic diagram illustrating a schematic configuration of the straddle-type vehicle 1. The straddle-type vehicle 1 is a two-wheeled motorcycle corresponding to one example of the straddle-type vehicle according to the invention. As illustrated in Fig. 1, the straddle-type vehicle 1 includes a front wheel 2, a rear wheel 3, the engine 11, a hydraulic pressure control unit 12, a pressure sensor 13, a brake lamp 14, and a control device (ECU) 20.

The engine 11 corresponds to one example of a drive source of the straddle-type vehicle 1, and can output power to drive a drive wheel (specifically, the rear wheel 3). For example, one or a plurality of cylinders in which combustion chambers are formed, fuel injectors that inject fuel toward the combustion chambers, and spark plugs are provided to the engine 11. An air-fuel mixture containing air and the fuel is formed in the combustion chamber by injecting the fuel from the fuel injector, and the air-fuel mixture is ignited by the spark plug to undergo combustion. Therefore, a piston provided in the cylinder reciprocates, thereby rotating a crankshaft. In addition, a throttle valve is provided to an intake pipe of the engine 11, and the amount of intake air to the combustion chamber changes according to a throttle opening degree that is an opening degree of the throttle valve.

The hydraulic pressure control unit 12 is a unit having a function of controlling a braking force generated on the wheel. For example, the hydraulic pressure control unit 12 is provided on an oil path connecting a master cylinder and a wheel cylinder, and includes components (for example, control valves and a pump) for controlling the brake hydraulic pressure of the wheel cylinder. The braking force generated on the wheel is controlled by controlling the operation of the components of the hydraulic pressure control unit 12. The pressure sensor 13 that detects a pressure of a brake fluid of the straddle-type vehicle 1 is provided to the hydraulic pressure control unit 12. Incidentally, details of a brake system 10 including the hydraulic pressure control unit 12 will be described later.

The brake lamp 14 is a lamp that lights up in response to a brake operation performed by the rider of the straddle-type vehicle 1. The brake lamp 14 is provided to a rear portion of the straddle-type vehicle 1, and is provided to call attention to vehicles around the straddle-type vehicle 1 (mainly, vehicles located behind the straddle-type vehicle 1). Drivers of the vehicles around the straddle-type vehicle 1 can recognize that the brake operation is performed in the straddle-type vehicle 1, by visually observing the brake lamp 14 in a lit state.

The control device 20 controls each device of the straddle-type vehicle 1. For example, a part or the entirety of the control device 20 is composed of a microcomputer, a microprocessor unit, a memory, and the like. In addition, for example, a part or the entirety of the control device 20 may be composed of updatable one such as firmware, or may be a program module or the like executed by commands from a CPU or the like. For example, the control device 20 may be one device, or may be divided into a plurality of devices.

Fig. 2 is a block diagram illustrating one example of a functional configuration of the control device 20. As illustrated in Fig. 2, the control device 20 includes, for example, an acquisition section 21 and a control section 22.

The acquisition section 21 acquires information from each device of the straddle-type vehicle 1, and outputs the information to the control section 22. For example, the acquisition section 21 acquires information from the pressure sensor 13. Incidentally, in the present specification, acquiring information can include extracting or generating information (for example, calculation), and the like.

The control section 22 controls the operation of each device of the straddle-type vehicle 1. The control section 22 controls, for example, the operation of the engine 11, the hydraulic pressure control unit 12, and the brake lamp 14.

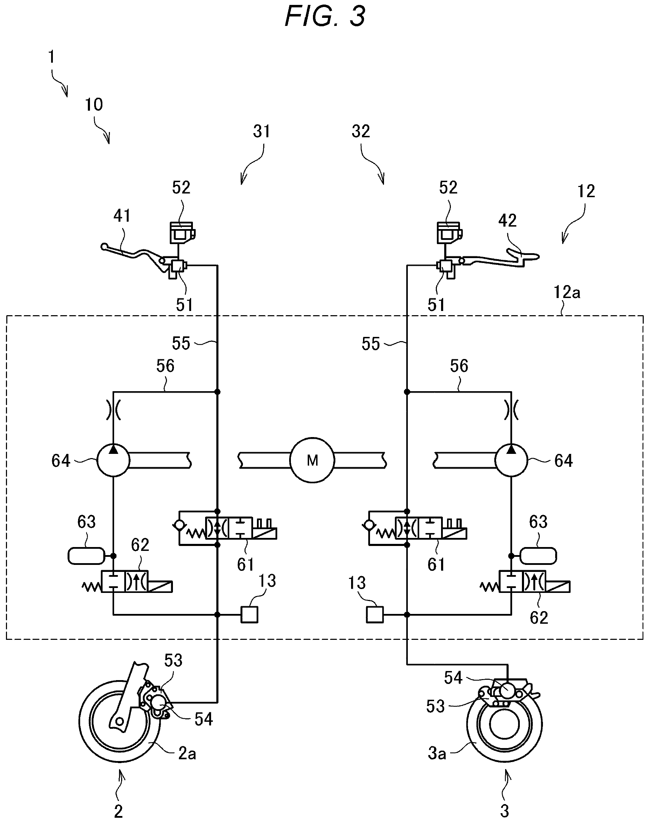

Here, a schematic configuration of the brake system 10 of the straddle-type vehicle 1 and control of a braking force generated in the straddle-type vehicle 1 will be described with reference to Fig. 3. Fig. 3 is a schematic diagram illustrating a schematic configuration of the brake system 10 of the straddle-type vehicle 1. As illustrated in Fig. 3, the brake system 10 includes a front wheel brake mechanism 31, a rear wheel brake mechanism 32, a first brake operating portion 41, and a second brake operating portion 42. The first brake operating portion 41 is, for example, a brake lever. The front wheel brake mechanism 31 brakes the front wheel 2 in conjunction with at least the first brake operating portion 41. The second brake operating portion 42 is, for example, a brake pedal. The rear wheel brake mechanism 32 brakes the rear wheel 3 in conjunction with at least the second brake operating portion 42. A part of the front wheel brake mechanism 31 and a part of the rear wheel brake mechanism 32 are included in the hydraulic pressure control unit 12.

Each of the front wheel brake mechanism 31 and the rear wheel brake mechanism 32 includes a master cylinder 51 with a built-in piston (not illustrated); a reservoir 52 attached to the master cylinder 51; a brake caliper 53 held by a body of the straddle-type vehicle 1 and including brake pads (not illustrated); a wheel cylinder 54 provided to the brake caliper 53; a main flow path 55 through which the brake fluid in the master cylinder 51 flows to the wheel cylinder 54; and an auxiliary flow path 56 through which the brake fluid in the wheel cylinder 54 is released.

An inlet valve (EV) 61 is provided to the main flow path 55. The auxiliary flow path 56 bypasses the main flow path 55 between a wheel cylinder 54 side and a master cylinder 51 side with respect to the inlet valve 61. An outlet valve (AV) 62, an accumulator 63, and a pump 64 are provided to the auxiliary flow path 56 in order from an upstream side.

The inlet valve 61 is, for example, an electromagnetic valve that is opened in a non-energized state and that is closed in an energized state. The outlet valve 62 is, for example, an electromagnetic valve that is closed in a non-energized state and that is opened in an energized state.

The hydraulic pressure control unit 12 includes components for controlling the pressure of the brake fluid which include the inlet valve 61, the outlet valve 62, the accumulator 63, and the pump 64, and a substrate 12a to which these components are provided and in which flow paths constituting the main flow path 55 and the auxiliary flow path 56 are formed.

Incidentally, the substrate 12a may be formed of one member, or may be formed of a plurality of members. In addition, in a case where the substrate 12a is formed of a plurality of members, the components may be separately provided to different members.

The operation of the above-described components of the hydraulic pressure control unit 12 is controlled by the control section 22 of the control device 20. As a result, a braking force generated on the front wheel 2 by the front wheel brake mechanism 31 and a braking force generated on the rear wheel 3 by the rear wheel brake mechanism 32 are controlled.

In normal times (namely, when a setting is made to generate a braking force on the wheel in response to a brake operation performed by the rider), the control device 20 causes the inlet valve 61 to be opened and causes the outlet valve 62 to be closed. In this state, when the first brake operating portion 41 is operated, in the front wheel brake mechanism 31, the piston (not illustrated) of the master cylinder 51 is pushed in to increase the pressure of the brake fluid in the wheel cylinder 54, and the brake pads (not illustrated) of the brake caliper 53 are pressed against a rotor 2a of the front wheel 2 to generate a braking force on the front wheel 2. In addition, when the second brake operating portion 42 is operated, in the rear wheel brake mechanism 32, the piston (not illustrated) of the master cylinder 51 is pushed in to increase the pressure of the brake fluid in the wheel cylinder 54, and the brake pads (not illustrated) of the brake caliper 53 are pressed against a rotor 3a of the rear wheel 3 to generate a braking force on the rear wheel 3.

The control device 20 executes anti-lock brake control when locking or the possibility of locking occurs on the wheel. In the anti-lock brake control, the braking force of the wheel is adjusted to a braking force that can avoid locking. When the anti-lock brake control is actuated, the control device 20 causes the inlet valve 61 to be closed and causes the outlet valve 62 to be opened, and in this state, the pump 64 is driven to reduce the pressure of the brake fluid in the wheel cylinder 54, thereby reducing the braking force generated on the wheel. Then, by closing both the inlet valve 61 and the outlet valve 62 from the above-described state, the pressure of the brake fluid in the wheel cylinder 54 is maintained, and the braking force generated on the wheel is held. Thereafter, by opening the inlet valve 61 and closing the outlet valve 62, the pressure of the brake fluid in the wheel cylinder 54 is increased, and the braking force generated on the wheel is increased.

In an example of Fig. 3, the pressure sensor 13 is provided to each of the front wheel brake mechanism 31 and the rear wheel brake mechanism 32. The pressure sensor 13 detects a pressure of the brake fluid in the wheel cylinder 54, and outputs the detection result. In this case, the control device 20 can estimate a pressure of the brake fluid in the master cylinder 51 based on the detection result of the pressure sensor 13. Then, the control section 22 of the control device 20 controls the operation of the brake lamp 14 based on the detection result of the pressure sensor 13.

However, as the pressure sensor 13, a sensor that detects a pressure of the brake fluid in the master cylinder 51 may be used, and the control section 22 may control the operation of the brake lamp 14 based on the detection result of such a pressure sensor 13. In addition, the control section 22 may control the operation of the brake lamp 14 using only one of the detection result of the pressure sensor 13 provided to the front wheel brake mechanism 31 and the detection result of the pressure sensor 13 provided to the rear wheel brake mechanism 32. In addition, the control section 22 may control the operation of the brake lamp 14 using both the detection result of the pressure sensor 13 provided to the front wheel brake mechanism 31 and the detection result of the pressure sensor 13 provided to the rear wheel brake mechanism 32. For example, the control section 22 may set the brake lamp 14 to a lit state when it is expected that at least one of a brake operation using the first brake operating portion 41 and a brake operation using the second brake operating portion 42 is performed.

The brake system 10 has been described above with reference to Fig. 3; however, the example of Fig. 3 is merely one example, and the configuration of the brake system 10 is not limited to the example of Fig. 3. For example, a supply flow path for supplying the brake fluid in the master cylinder 51 to the auxiliary flow path 56 may be further provided. In addition, one of the front wheel brake mechanism 31 and the rear wheel brake mechanism 32 may be omitted.

### <Operation of control device>

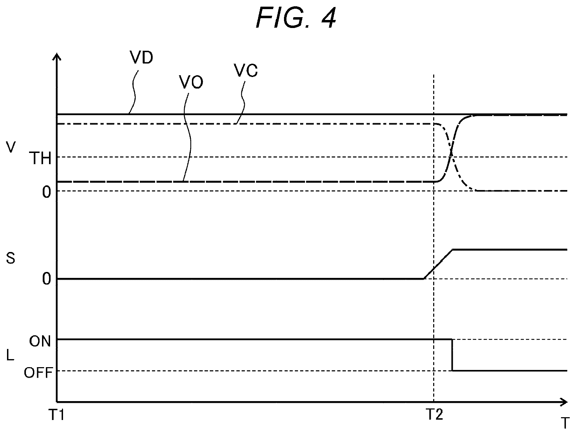

The operation of the control device 20 according to the embodiment of the invention will be described with reference to Figs. 4 to 9.

As described above, the control device 20 controls the operation of the brake lamp 14. Specifically, the acquisition section 21 acquires a pressure detection value (refer to a pressure detection value VD in Figs. 4 and 6 to 9 to be described later) of the brake fluid of the straddle-type vehicle 1, and the control section 22 controls the operation of the brake lamp 14 based on the pressure detection value. In the above example, the pressure detection value is a detection value detected by the pressure sensor 13. Incidentally, a detection value detected by a pressure sensor provided outside the hydraulic pressure control unit 12 may be used as the pressure detection value.

Here, the pressure detection value detected by the pressure sensor 13 may deviate from an actual pressure value. Therefore, the control section 22 controls the operation of the brake lamp 14 based on a first pressure correction value (refer to a first pressure correction value VC in Figs. 4 and 6 to 9 to be described later) that is a value obtained by subtracting a first offset amount (refer to a first offset amount VO in Figs. 4 and 6 to 9 to be described later) from the pressure detection value. For example, the control section 22 sets the brake lamp 14 to a lit state when the first pressure correction value is larger than a threshold value (refer to a threshold value TH in Figs. 4 and 6 to 9 to be described later), and sets the brake lamp 14 to an unlit state when the first pressure correction value is smaller than the threshold value.

By the way, in a situation where the straddle-type vehicle 1 is parked without being driven for a long period, the amount of deviation of the pressure detection value detected by the pressure sensor 13 from the actual pressure value may change. Then, when the ignition of the straddle-type vehicle 1 is on in such a situation, a situation where the operation of the brake lamp 14 is inappropriate and contrary to intention may occur.

Fig. 4 is a diagram illustrating one example of the transition of each state quantity in a comparative example. In the comparative example, when the ignition of the straddle-type vehicle 1 is on, the operation of the brake lamp 14 is controlled based on the first pressure correction value VC obtained by subtracting the first offset amount VO at the previous ignition off from the pressure detection value VD.

In Fig. 4, the horizontal axis is a time axis T, and the transitions of various values V related to pressure (specifically, the pressure detection value VD, the first offset amount VO, and the first pressure correction value VC), a vehicle speed S of the straddle-type vehicle 1, and an actuation state L of the brake lamp 14 are illustrated. In addition, in Fig. 4, the actuation state L of the brake lamp 14 is illustrated as ON when the brake lamp 14 is in a lit state, and is illustrated as OFF when the brake lamp 14 is in an unlit state. In the comparative example of Fig. 4, at time point T1, the ignition is switched from OFF to ON in a state where a brake operation is not performed.

Here, in the comparative example of Fig. 4, as a result of the straddle-type vehicle 1 being parked without being driven for a long period since the previous ignition off, the amount of deviation of the pressure detection value VD from the actual pressure value changes. As a result, as illustrated in Fig. 4, the amount of deviation between the pressure detection value VD and the first offset amount VO is large. Therefore, after time point T1, the first pressure correction value VC becomes larger than the threshold value TH, and the brake lamp 14 is set to a lit state in spite of no brake operation being performed. Such a situation corresponds to a situation where the operation of the brake lamp 14 is inappropriate and contrary to intention.

Incidentally, in the comparative example of Fig. 4, at time point T2 after time point T1, a launch phase of the straddle-type vehicle 1 starts. The launch phase refers to a phase in which the straddle-type vehicle 1 at a stop launches upon a start-up of the drive source (in the above example, the engine 11). The start time point of the launch phase refers to, for example, a time point at which the vehicle speed S or acceleration of the straddle-type vehicle 1 reaches a certain magnitude after the start-up of the drive source (in the above example, the engine 11).

In a pre-launch phase from time point T1 to time point T2 (namely, a phase from when the ignition of the straddle-type vehicle 1 is on until the launch phase of the straddle-type vehicle 1 starts), it cannot be determined whether a brake operation is performed. Therefore, in the comparative example, the adjustment of the first offset amount VO is not performed in the pre-launch phase from time point T1 to time point T2. However, after time point T2, it can be determined that the launch phase is started, for example, based on the vehicle speed S. In the launch phase, since it is assumed that a brake operation is not performed, the first offset amount VO can be adjusted to coincide with the pressure detection value VD. Therefore, after time point T2, the first offset amount VO is adjusted to coincide with the pressure detection value VD, the first pressure correction value VC becomes smaller than the threshold value TH, and the brake lamp 14 is set to an unlit state. In Fig. 4, for example, as a result of performing a process using a low-pass filter, the first offset amount VO follows the pressure detection value VD with a time delay.

As described above, in the comparative example, a situation where the operation of the brake lamp 14 is inappropriate and contrary to intention may occur. On the other hand, according to the embodiment of the invention, by devising a process related to control of the brake lamp 14, as will be described later, suppressing an inappropriate operation of the brake lamp 14 is achieved. Hereinafter, the process related to control of the brake lamp 14 in the embodiment of the invention will be described.

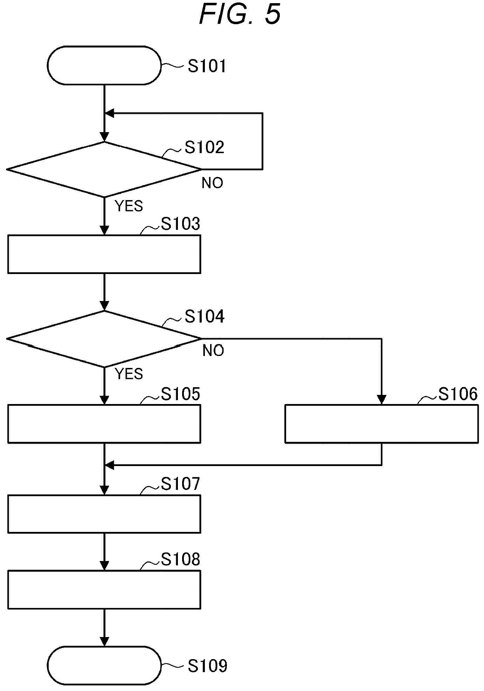

Fig. 5 is a flowchart illustrating one example of the flow of a process performed by the control device 20 according to the embodiment of the invention. Step S101 in Fig. 5 corresponds to the start of the control flow illustrated in Fig. 5. Step S109 in Fig. 5 corresponds to the end of the control flow illustrated in Fig. 5. The control flow illustrated in Fig. 5 is executed when the ignition of the straddle-type vehicle 1 is off.

When the control flow illustrated in Fig. 5 is started, in step S102, the control section 22 determines whether the ignition of the straddle-type vehicle 1 is switched from OFF to ON. When it is not determined that the ignition of the straddle-type vehicle 1 is switched from OFF to ON (step S102: NO), step S102 is repeated. On the other hand, when it is determined that the ignition of the straddle-type vehicle 1 is switched from OFF to ON (step S102: YES), the process proceeds to step S103.

When YES is determined in step S102, in step S103, the control section 22 determines a reference value of the pressure detection value VD based on the pressure detection value VD detected after the previous ignition on. The reference value of the pressure detection value VD is, for example, a standard value of the pressure detection value VD detected after the previous ignition on. For example, the control section 22 determines the reference value of the pressure detection value VD by performing sampling of the pressure detection value VD a plurality of times immediately after the ignition is on, and by performing statistical processing (for example, averaging or the like) on the obtained sampling values.

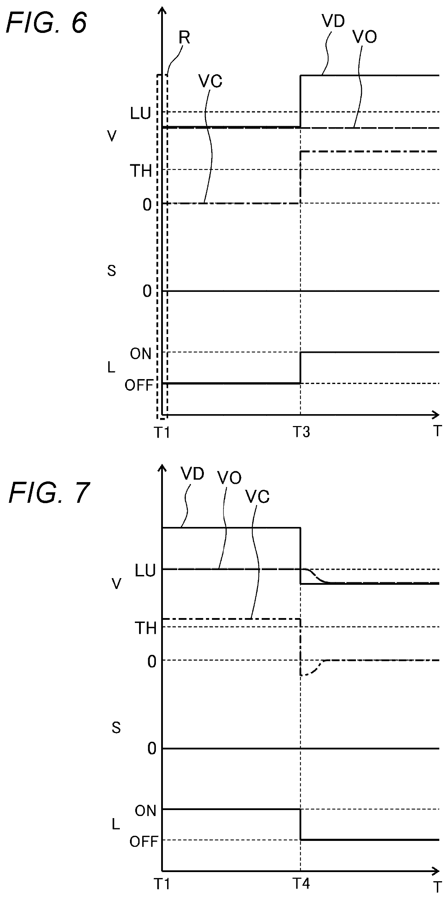

Subsequently to step S103, in step S104, the control section 22 determines whether the reference value of the pressure detection value VD is an upper limit value (refer to an upper limit value LU in Figs. 6 to 9 to be described later) or less. When it is determined that the reference value of the pressure detection value VD is the upper limit value or less (step S104: YES), the process proceeds to step S105. On the other hand, when it is determined that the reference value of the pressure detection value VD is larger than the upper limit value (step S104: NO), the process proceeds to step S106.

When YES is determined in step S104, in step S105, the control section 22 determines the reference value of the pressure detection value VD as the first offset amount VO. On the other hand, when NO is determined in step S104, in step S106, the control section 22 determines the upper limit value as the first offset amount VO. In such a manner, the control section 22 limits the first offset amount VO to the upper limit value or less.

Subsequently to step S105 or step S106, in step S107, the control section 22 determines the first pressure correction value VC that is a value obtained by subtracting the first offset amount VO from the pressure detection value VD. Then, subsequently to step S107, in step S108, the control section 22 controls the operation of the brake lamp 14 based on the first pressure correction value VC, and ends the control flow illustrated in Fig. 5.

Incidentally, after the control flow illustrated in Fig. 5 is ended, the control section 22 subtracts the first offset amount VO determined in step S105 or step S106 from the pressure detection value VD detected at each time point to determine the first pressure correction value VC, and controls the operation of the brake lamp 14 based on the first pressure correction value VC determined in such a manner. However, as will be described later, after the control flow illustrated in Fig. 5 is ended, the control section 22 may adjust the first offset amount VO as appropriate.

As described above, the control section 22 of the control device 20 according to the embodiment of the invention executes a first control to control the operation of the brake lamp 14 in the pre-launch phase that is a phase from when the ignition of the straddle-type vehicle 1 is on until the launch phase of the straddle-type vehicle 1 starts, based on the first pressure correction value VC that is a value obtained by subtracting the first offset amount VO from the pressure detection value VD. Then, in the first control executed in the pre-launch phase, the first offset amount VO is determined based on the pressure detection value VD detected after the previous ignition on. In the flowchart of Fig. 5, the first control corresponds to a series of processes from step S103 to step S108. Namely, in the pre-launch phase, the first offset amount VO is determined based on the pressure detection value VD detected after the previous ignition on, and the operation of the brake lamp 14 is controlled based on the first pressure correction value VC determined using the first offset amount VO determined in such a manner. As a result, as will be described later, suppressing an inappropriate operation of the brake lamp 14 is achieved. Hereinafter, examples of the transition of each state quantity in the embodiment of the invention will be more specifically described with reference to Figs. 6 to 9.

Incidentally, in the flowchart of Fig. 5 and each example of Figs. 6 to 9 to be described later, an example in which the execution timing of the first control executed in the pre-launch phase is immediately after the ignition is on will be described. However, the execution timing of the first control may be any timing in the pre-launch phase, and is not limited to being immediately after the ignition is on. However, the earlier the execution timing of the first control is, the more effectively an inappropriate operation of the brake lamp 14 can be suppressed. For example, a situation where the brake lamp 14 is set to a lit state in spite of no brake operation being performed can be more early resolved. Therefore, it is preferable that the execution timing of the first control is as early as possible. From this viewpoint, as in the flowchart of Fig. 5 and each example of Figs. 6 to 9, it is preferable that the control section 22 executes the first control at at least one time point in the pre-launch phase before a start-up of the drive source (in the above example, the engine 11) of the straddle-type vehicle 1.

Figs. 6 to 9 are diagrams illustrating a first example, a second example, a third example, and a fourth example of the transition of each state quantity in the embodiment of the invention, respectively. In Figs. 6 to 9, similarly to Fig. 4 described above, the horizontal axis is the time axis T, and the transitions of various values V related to pressure (specifically, the pressure detection value VD, the first offset amount VO, and the first pressure correction value VC), the vehicle speed S of the straddle-type vehicle 1, and the actuation state L of the brake lamp 14 are illustrated. Incidentally, in some of the drawings, the illustration of the transitions of some state quantities is omitted as appropriate.

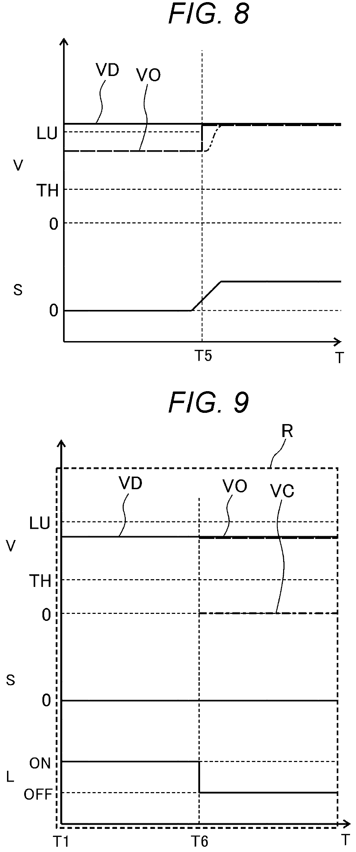

In the first example of Fig. 6, similarly to the comparative example of Fig. 4, at time point T1, the ignition is switched from OFF to ON in a state where a brake operation is not performed. As described above, in the embodiment of the invention, the first control is performed immediately after the ignition is on. In the first example of Fig. 6, immediately after time point T1 at which the ignition is on, the first offset amount VO is determined based on the pressure detection value VD detected after the previous ignition on. Incidentally, details of the transition of each state quantity in a period immediately after the ignition is on, which is indicated by a region R, are illustrated in Fig. 6 in a simplified manner. The details of the transition of each state quantity in the period indicated by the region R will be described later with reference to Fig. 9.

As described above, the control section 22 determines the reference value of the pressure detection value VD immediately after time point T1 at which the ignition is on, based on the pressure detection value VD detected after the previous ignition on. Then, when the reference value of the pressure detection value VD is the upper limit value LU or less, the control section 22 determines the reference value of the pressure detection value VD as the first offset amount VO. On the other hand, when the reference value of the pressure detection value VD is larger than the upper limit value LU, the control section 22 determines the upper limit value LU as the first offset amount VO.

Here, the upper limit value LU is set such that when a brake operation is not performed, the reference value of the pressure detection value VD becomes basically the upper limit value LU or less, and when a brake operation is performed, the reference value of the pressure detection value VD becomes basically larger than the upper limit value LU. Therefore, in the first example of Fig. 6, the reference value of the pressure detection value VD is determined as the first offset amount VO. Namely, the first offset amount VO is determined to coincide with the pressure detection value VD detected after the previous ignition on. Therefore, the first pressure correction value VC becomes approximately zero. As a result, after time point T1, the first pressure correction value VC becomes smaller than the threshold value TH, and the brake lamp 14 is set to an unlit state.

In addition, in the first example of Fig. 6, a brake operation is performed at time point T3 after time point T1. As a result, at time point T3, the pressure detection value VD increases, and the first pressure correction value VC increases accordingly. Therefore, after time point T3, the first pressure correction value VC becomes larger than the threshold value TH, and the brake lamp 14 is set to a lit state.

As described above, in the embodiment of the invention, the first control is executed in the pre-launch phase that is a phase from when the ignition of the straddle-type vehicle 1 is on until the launch phase of the straddle-type vehicle 1 starts. As a result, unlike the comparative example of Fig. 4, a situation where the brake lamp 14 is set to a lit state in spite of no brake operation being performed is resolved without waiting for the launch phase of the straddle-type vehicle 1. Therefore, an inappropriate operation of the brake lamp 14 can be suppressed.

In the second example of Fig. 7, unlike the first example of Fig. 6, at time point T1, the ignition is switched from OFF to ON in a state where a brake operation is performed. In the second example of Fig. 7 as well, the control section 22 determines the reference value of the pressure detection value VD immediately after time point T1 at which the ignition is on, based on the pressure detection value VD detected after the previous ignition on. Then, the control section 22 determines the first offset amount VO based on the result of comparison between the reference value of the pressure detection value VD and the upper limit value LU. Here, in the second example of Fig. 7, since the reference value of the pressure detection value VD is larger than the upper limit value LU, the upper limit value LU is determined as the first offset amount VO. Therefore, after time point T1, the first pressure correction value VC becomes larger than the threshold value TH, and the brake lamp 14 is set to a lit state.

In addition, in the second example of Fig. 7, the brake operation is released at time point T4 after time point T1. As a result, at time point T4, the pressure detection value VD decreases, and the first pressure correction value VC decreases accordingly. Here, when the pressure detection value VD decreases, it is assumed that a brake operation is not performed, so that the control section 22 can adjust the first offset amount VO to coincide with the pressure detection value VD. For example, in the second example of Fig. 7, after time point T4, the control section 22 causes the first offset amount VO to follow the pressure detection value VD. As a result, the first offset amount VO is adjusted to coincide with the pressure detection value VD. In Fig. 7, for example, as a result of performing a process using a low-pass filter, the first offset amount VO follows the pressure detection value VD with a time delay. In addition, after time point T4, the first pressure correction value VC becomes smaller than the threshold value TH, and the brake lamp 14 is set to an unlit state.

Incidentally, in the second example of Fig. 7, after time point T4, the control section 22 determines the first offset amount VO based on the pressure detection value VD, determines the first pressure correction value VC that is a value obtained by subtracting the determined first offset amount VO from the pressure detection value VD, and controls the operation of the brake lamp 14 based on the determined first pressure correction value VC. Namely, even after time point T4, the first control is executed.

As described above, the control section 22 limits the first offset amount VO to the upper limit value LU or less. As a result, when the first control is executed, a situation where the brake lamp 14 is set to an unlit state in spite of a brake operation being performed can be suppressed. Therefore, an inappropriate operation of the brake lamp 14 can be more appropriately suppressed.

In the third example of Fig. 8, at time point T5 after the ignition of the straddle-type vehicle 1 is on, the launch phase of the straddle-type vehicle 1 starts. Here, the pressure detection value VD may change due to various factors (for example, electromagnetic noise and the like) other than the brake operation. In the third example of Fig. 8, in the pre-launch phase before time point T5, as a result of a change in the pressure detection value VD, the pressure detection value VD is larger than the first offset amount VO. In such a case, the control section 22 can adjust the first offset amount VO to coincide with the pressure detection value VD by executing the first control not only in the pre-launch phase but also at at least one time point in the launch phase.

For example, in the third example of Fig. 8, at time point T5, the control section 22 executes the first control. Namely, at time point T5, the control section 22 determines the first offset amount VO based on the pressure detection value VD, determines the first pressure correction value VC that is a value obtained by subtracting the determined first offset amount VO from the pressure detection value VD, and controls the operation of the brake lamp 14 based on the determined first pressure correction value VC.

Here, at time point T5, the control section 22 may reset the first offset amount VO to coincide with the pressure detection value VD. Specifically, in the third example of Fig. 8, in the pre-launch phase before time point T5, the pressure detection value VD is larger than the upper limit value LU. Therefore, at time point T5, the control section 22 invalidates the setting of the upper limit value LU, and determines the reference value of the pressure detection value VD as the first offset amount VO without taking the upper limit value LU into consideration. As a result, at time point T5, the first offset amount VO is reset to coincide with the pressure detection value VD.

As described above, the control section 22 may set the first offset amount VO differently between the first control executed in the pre-launch phase and the first control executed in the launch phase. As a result, when the pressure detection value VD deviates from the first offset amount VO in the pre-launch phase, the first offset amount VO can be adjusted to coincide with the pressure detection value VD by executing the first control in the launch phase.

In addition, as described above, the control section 22 may set the upper limit value LU differently between the first control executed in the pre-launch phase and the first control executed in the launch phase. As a result, even when the pressure detection value VD is larger than the upper limit value LU in the pre-launch phase, the first offset amount VO can be adjusted to coincide with the pressure detection value VD by executing the first control in the launch phase. Incidentally, in the above example, the control section 22 invalidates the setting of the upper limit value LU; however, the process of setting the upper limit value LU differently is not limited to this example. For example, the control section 22 may set the upper limit value LU to be smaller in the first control executed in the launch phase than in the first control executed in the pre-launch phase.

By the way, as described above with reference to Fig. 7, the control section 22 may cause the first offset amount VO to follow the pressure detection value VD in the first control. For example, as illustrated by a two-dot chain line in Fig. 8, after time point T5, the control section 22 may cause the first offset amount VO to follow the pressure detection value VD. In Fig. 8, for example, as a result of performing a process using a low-pass filter, the first offset amount VO follows the pressure detection value VD with a time delay. Here, the control section 22 may set the followability of the first offset amount VO with respect to the pressure detection value VD differently between the first control executed in the pre-launch phase and the first control executed in the launch phase. For example, the control section 22 may set the followability of the first offset amount VO with respect to the pressure detection value VD to be higher in the first control executed in the launch phase than in the first control executed in the pre-launch phase. As a result, in the launch phase, the first offset amount VO can be made to quickly coincide with the pressure detection value VD.

Incidentally, the first offset amount VO is easily adjusted to coincide with the pressure detection value VD by setting the upper limit value LU differently between the first control executed in the pre-launch phase and the first control executed in the launch phase, in addition to at least one of the first offset amount VO and the followability of the first offset amount VO with respect to the pressure detection value VD. However, the control section 22 may set at least one of the first offset amount VO and the followability of the first offset amount VO with respect to the pressure detection value VD differently between the first control executed in the pre-launch phase and the first control executed in the launch phase without changing the setting of the upper limit value LU.

The fourth example of Fig. 9 is an example of the transition of each state quantity in the period immediately after the ignition on, which is indicated by the region R in Fig. 6. In the fourth example of Fig. 9, at time point T1, the ignition is switched from OFF to ON in a state where a brake operation is not performed. Then, the control section 22 performs a process of determining the reference value of the pressure detection value VD, the first offset amount VO, and the first pressure correction value VC in a period from time point T1 to time point T6. Namely, in the fourth example of Fig. 9, in the period from time point T1 to time point T6, the operation of the brake lamp 14 is not controlled by the first control, and after time point T6, the operation of the brake lamp 14 is controlled by the first control.

Here, in the fourth example of Fig. 9, in the period from time point T1 to time point T6 in the pre-launch phase before the operation of the brake lamp 14 is controlled by the first control, the control section 22 sets the brake lamp 14 to a lit state. In such a manner, the control section 22 may set the brake lamp 14 to a lit state at least at one time point in the pre-launch phase before the operation of the brake lamp 14 is controlled by the first control. In this case, for example, in the period immediately after the ignition on in which the first pressure correction value VC is not determined, the brake lamp 14 is forcibly set to a lit state.

However, the control section 22 may set the brake lamp 14 to an unlit state at at least one time point in the pre-launch phase before the operation of the brake lamp 14 is controlled by the first control. In this case, for example, the brake lamp 14 is forcibly set to an unlit state in the period immediately after the ignition on in which the first pressure correction value VC is not determined.

In addition, the control section 22 may execute a third control to control the operation of the brake lamp 14 at at least one time point in the pre-launch phase before the operation of the brake lamp 14 is controlled by the first control, based on a third pressure correction value that is a value obtained by subtracting a third offset amount, which is determined before the ignition is on, from the pressure detection value VD. For example, in the third control, the control section 22 may determine the third pressure correction value using the first offset amount VO at the previous ignition off as the third offset amount, and may control the operation of the brake lamp 14 based on the determined third pressure correction value. As a result, when the change in the amount of deviation of the pressure detection value VD from the actual pressure value during parking is small, a situation where the brake lamp 14 is set to a lit state in spite of no brake operation being performed after the ignition on and a situation where the brake lamp 14 is set to an unlit state in spite of a brake operation being performed after the ignition on can be suppressed.

The examples of the process performed by the control device 20 have been described above with reference to the flowchart of Fig. 5 and each example of Figs. 6 to 9. However, the process performed by the control device 20 may be process that is changed from the examples of the process described above.

For example, in the pre-launch phase, the control section 22 may execute a second control to control the operation of the brake lamp 14 according to stability information of the pressure detection value VD detected after the previous ignition on, based on the pressure detection value VD or based on a second pressure correction value that is a value obtained by subtracting a second offset amount smaller than the first offset amount VO from the pressure detection value VD. The stability information of the pressure detection value VD may be information indicating the value of a stability of the pressure detection value VD, may be rough information in which the stability is expressed in several stages, or may be information that can be substantially converted into such information. The stability of the pressure detection value VD increases as the variation in the pressure detection value VD decreases. Examples of the stability information of the pressure detection value VD include a standard deviation of a plurality of sample values of the pressure detection value VD, and the like.

Specifically, in the pre-launch phase, when the stability information of the pressure detection value VD detected after the previous ignition on is information indicating a stability higher than a reference, the control section 22 may execute the second control. The above-described reference is set such that it can be determined whether the stability of the pressure detection value VD is high enough to assume that a brake operation is performed. Namely, a case where the stability information of the pressure detection value VD is information indicating a stability higher than the reference corresponds to a case where it is assumed that a brake operation is performed. In such a case, for example, as the second control, the control section 22 may control the operation of the brake lamp 14 based on the result of comparison between the pressure detection value VD and the threshold value TH, without using the first pressure correction value VC. In addition, for example, as the second control, the control section 22 may set the upper limit value LU to 0 or a value in the vicinity of 0, and may control the operation of the brake lamp 14 based on the result of comparison between the threshold value TH and the second pressure correction value that is a value obtained by subtracting the second offset amount smaller than the first offset amount VO from the pressure detection value VD. As a result, a situation where the brake lamp 14 is set to an unlit state in spite of a brake operation being performed can be more appropriately suppressed.

In addition, for example, the control section 22 may set the first offset amount VO differently between the first controls executed at at least two time points in the pre-launch phase. For example, in the second example of Fig. 7 described above, the first control is executed immediately after time point T1 at which the ignition is on, and is also executed after time point T4. Then, the control section 22 sets the first offset amount VO differently between the first control executed immediately after time point T1 and the first control executed after time point T4. As a result, the first offset amount VO is made to more easily coincide with the pressure detection value VD compared to when the first control is executed at only one time point in the pre-launch phase.

### <Effects of control device>

Effects of the control device 20 according to the embodiment of the invention will be described.

The control device 20 includes the acquisition section 21 that acquires a pressure detection value VD of a brake fluid of the straddle-type vehicle 1; and the control section 22 that controls an operation of the brake lamp 14. The control section 22 executes a first control to control the operation of the brake lamp 14 in a pre-launch phase that is a phase from when an ignition of the straddle-type vehicle 1 is on until a launch phase of the straddle-type vehicle 1 starts, based on a first pressure correction value VC that is a value obtained by subtracting the first offset amount VO from the pressure detection value VD. In the first control executed in the pre-launch phase, the first offset amount VO is determined based on the pressure detection value VD detected after a previous ignition on. As a result, the pressure value used to control the operation of the brake lamp 14 (specifically, the first pressure correction value VC) can be adjusted based on the pressure detection value VD detected after the previous ignition on, without waiting for the launch phase of the straddle-type vehicle 1. Therefore, after the ignition on, the deviation of the pressure value, which is used to control the operation of the brake lamp 14, from the actual pressure value can be early suppressed, so that an inappropriate operation of the brake lamp 14 can be suppressed.

Preferably, in the control device 20, the control section 22 executes the first control at at least one time point in the pre-launch phase before a start-up of a drive source (in the above example, the engine 11) of the straddle-type vehicle 1. As a result, an inappropriate operation of the brake lamp 14 can be effectively suppressed. For example, a situation where the brake lamp 14 is set to a lit state in spite of no brake operation being performed can be more early resolved.

Preferably, in the control device 20, the control section 22 limits the first offset amount VO to an upper limit value LU or less in the first control executed in the pre-launch phase. As a result, when the first control is executed, a situation where the brake lamp 14 is set to an unlit state in spite of a brake operation being performed can be suppressed. Therefore, an inappropriate operation of the brake lamp 14 can be more appropriately suppressed.

Preferably, in the control device 20, in the pre-launch phase, when stability information of the pressure detection value VD detected after the previous ignition on is information indicating a stability higher than a reference, the control section 22 executes a second control to control the operation of the brake lamp 14 based on the pressure detection value VD or based on a second pressure correction value that is a value obtained by subtracting a second offset amount smaller than the first offset amount VO from the pressure detection value VD. As a result, a situation where the brake lamp 14 is set to an unlit state in spite of a brake operation being performed can be more appropriately suppressed.

Preferably, in the control device 20, the control section 22 sets the first offset amount VO differently between the first controls executed at at least two time points in the pre-launch phase. As a result, the first offset amount VO is made to more easily coincide with the pressure detection value VD compared to when the first control is executed at only one time point in the pre-launch phase.

Preferably, in the control device 20, the control section 22 also executes the first control at at least one time point in the launch phase. As a result, when the pressure detection value VD deviates from the first offset amount VO in the pre-launch phase, the first offset amount VO can be adjusted to coincide with the pressure detection value VD by executing the first control in the launch phase.

Preferably, in the control device 20, the control section 22 sets the first offset amount VO differently between the first control executed in the pre-launch phase and the first control executed in the launch phase. As a result, when the pressure detection value VD deviates from the first offset amount VO in the pre-launch phase, adjusting the first offset amount VO to coincide with the pressure detection value VD is appropriately realized by executing the first control in the launch phase.

Preferably, in the control device 20, the control section 22 limits the first offset amount VO to the upper limit value LU or less, and sets the upper limit value LU differently between the first control executed in the pre-launch phase and the first control executed in the launch phase. As a result, even when the pressure detection value VD is larger than the upper limit value LU in the pre-launch phase, the first offset amount VO can be adjusted to coincide with the pressure detection value VD by executing the first control in the launch phase.

Preferably, in the control device 20, the control section 22 causes the first offset amount VO to follow the pressure detection value VD in the first control, and sets a followability of the first offset amount VO with respect to the pressure detection value VD differently between the first control executed in the pre-launch phase and the first control executed in the launch phase. As a result, in the launch phase, the first offset amount VO can be made to quickly coincide with the pressure detection value VD.

Preferably, in the control device 20, the control section 22 sets the brake lamp 14 to a lit state at at least one time point in the pre-launch phase before the operation of the brake lamp 14 is controlled by the first control. As a result, for example, in a period immediately after the ignition on in which the first pressure correction value VC is not determined, the brake lamp 14 is forcibly set to a lit state. Therefore, it is possible to make surrounding vehicles aware that the ignition of the straddle-type vehicle 1 is on.

Preferably, in the control device 20, the control section 22 sets the brake lamp 14 to an unlit state at at least one time point in the pre-launch phase before the operation of the brake lamp 14 is controlled by the first control. As a result, for example, in the period immediately after the ignition on in which the first pressure correction value VC is not determined, the brake lamp 14 is forcibly set to an unlit state. Therefore, the electricity consumption of the straddle-type vehicle 1 can be saved.

Preferably, in the control device 20, the control section 22 executes a third control to control the operation of the brake lamp 14 at at least one time point in the pre-launch phase before the operation of the brake lamp 14 is controlled by the first control, based on a third pressure correction value that is a value obtained by subtracting a third offset amount, which is determined before the ignition is on, from the pressure detection value VD. As a result, when the change in the amount of deviation of the pressure detection value VD from the actual pressure value during parking is small, a situation where the brake lamp 14 is set to a lit state in spite of no brake operation being performed after the ignition on and a situation where the brake lamp 14 is set to an unlit state in spite of a brake operation being performed after the ignition on can be suppressed.

The invention is not limited to the description of the embodiment. For example, only a part of the embodiment may be implemented.

### Reference Signs List

- 1:: Straddle-type vehicle
- 2:: Front wheel
- 2a:: Rotor
- 3:: Rear wheel
- 3a:: Rotor
- 10:: Brake system
- 11:: Engine
- 12:: Hydraulic pressure control unit
- 12a:: Substrate
- 13:: Pressure sensor
- 14:: Brake lamp
- 20:: Control device
- 21:: Acquisition section
- 22:: Control section
- 31:: Front wheel brake mechanism
- 32:: Rear wheel brake mechanism
- 41:: First brake operating portion
- 42:: Second brake operating portion
- 51:: Master cylinder
- 52:: Reservoir
- 53:: Brake caliper
- 54:: Wheel cylinder
- 55:: Main flow path
- 56:: Auxiliary flow path
- 61:: Inlet valve
- 62:: Outlet valve
- 63:: Accumulator
- 64:: Pump
- L:: Actuation state
- LU:: Upper limit value
- R:: Region
- S:: Vehicle speed
- T:: Time axis
- T1:: Time point
- T2:: Time point
- T3:: Time point
- T4:: Time point
- T5:: Time point
- T6:: Time point
- TH:: Threshold value
- V:: Value
- VC:: First pressure correction value
- VD:: Pressure detection value
- VO:: First offset amount

## Claims

1. A control device (20) that controls an operation of a brake lamp (14) of a straddle-type vehicle (1), the device comprising:
an acquisition section (21) that acquires a pressure detection value (VD) of a brake fluid of the straddle-type vehicle (1); and
a control section (22) that controls the operation of the brake lamp (14),
**characterized in that** the control section (22) executes a first control to control the operation of the brake lamp (14) in a pre-launch phase that is a phase from when an ignition of the straddle-type vehicle (1) is on until a launch phase of the straddle-type vehicle (1) starts, based on a first pressure correction value (VC) that is a value obtained by subtracting a first offset amount (VO) from the pressure detection value (VD), and
in the first control executed in the pre-launch phase, the first offset amount (VO) is determined based on the pressure detection value (VD) detected after a previous ignition on.

2. The control device according to claim 1,
wherein the control section (22) executes the first control at at least one time point in the pre-launch phase before a start-up of a drive source (11) of the straddle-type vehicle (1).

3. The control device according to claim 1,
wherein the control section (22) limits the first offset amount (VO) to an upper limit value (LU) or less in the first control executed in the pre-launch phase.

4. The control device according to claim 1,
wherein in the pre-launch phase, when stability information of the pressure detection value (VD) detected after the previous ignition on is information indicating a stability higher than a reference, the control section (22) executes a second control to control the operation of the brake lamp (14) based on the pressure detection value (VD) or based on a second pressure correction value that is a value obtained by subtracting a second offset amount smaller than the first offset amount (VO) from the pressure detection value (VD).

5. The control device according to claim 1,
wherein the control section (22) sets the first offset amount (VO) differently between the first controls executed at at least two time points in the pre-launch phase.

6. The control device according to claim 1,
wherein the control section (22) also executes the first control at at least one time point in the launch phase.

7. The control device according to claim 6,
wherein the control section (22) sets the first offset amount (VO) differently between the first control executed in the pre-launch phase and the first control executed in the launch phase.

8. The control device according to claim 6,
wherein the control section (22) limits the first offset amount (VO) to an upper limit value (LU) or less, and sets the upper limit value (LU) differently between the first control executed in the pre-launch phase and the first control executed in the launch phase.

9. The control device according to claim 6,
wherein the control section (22) causes the first offset amount (VO) to follow the pressure detection value (VD) in the first control, and sets a followability of the first offset amount (VO) with respect to the pressure detection value (VD) differently between the first control executed in the pre-launch phase and the first control executed in the launch phase.

10. The control device according to any one of claims 1 to **9,**
wherein the control section (22) sets the brake lamp (14) to a lit state at at least one time point in the pre-launch phase before the operation of the brake lamp (14) is controlled by the first control.

11. The control device according to any one of claims 1 to **9,**
wherein the control section (22) sets the brake lamp (14) to an unlit state at at least one time point in the pre-launch phase before the operation of the brake lamp (14) is controlled by the first control.

12. The control device according to any one of claims 1 to **9,**
wherein the control section (22) executes a third control to control the operation of the brake lamp (14) at at least one time point in the pre-launch phase before the operation of the brake lamp (14) is controlled by the first control, based on a third pressure correction value that is a value obtained by subtracting a third offset amount, which is determined before the ignition is on, from the pressure detection value (VD).

13. A control method for controlling an operation of a brake lamp (14) of a straddle-type vehicle (1), the method comprising:
causing an acquisition section (21) of a control device (20) to acquire a pressure detection value (VD) of a brake fluid of the straddle-type vehicle (1); and
causing a control section (22) of the control device (20) to control the operation of the brake lamp (14),
**characterized by** the method steps of that the control section (22) executes a first control to control the operation of the brake lamp (14) in a pre-launch phase that is a phase from when an ignition of the straddle-type vehicle (1) is on until a launch phase of the straddle-type vehicle (1) starts, based on a first pressure correction value (VC) that is a value obtained by subtracting a first offset amount (VO) from the pressure detection value (VD), and
in the first control executed in the pre-launch phase, the first offset amount (VO) is determined based on the pressure detection value (VD) detected after a previous ignition on.

## Patentansprüche

1. Steuervorrichtung (20), die den Betrieb einer Bremsleuchte (14) eines Spreizsitzfahrzeugs (1) steuert, wobei die Vorrichtung Folgendes umfasst:
einen Erfassungsabschnitt (21), der einen Druckerfassungswert (VD) einer Bremsflüssigkeit des Spreizsitzfahrzeugs (1) erfasst; und
einen Steuerabschnitt (22), der den Betrieb der Bremsleuchte (14) steuert,
**dadurch gekennzeichnet, dass**
der Steuerabschnitt (22) eine erste Steuerung ausführt, um den Betrieb der Bremsleuchte (14) in einer Vorstartphase, die sich vom Einschalten der Zündung des Spreizsitzfahrzeugs (1) bis zum Beginn einer Startphase des Spreizsitzfahrzeugs (1) erstreckt, basierend auf einem ersten Druckkorrekturwert (VC), der ein Wert ist, der durch Subtrahieren eines ersten Versatzbetrags (VO) von dem Druckerfassungswert (VD) erhalten wird, zu steuern, und
in der ersten Steuerung, die in der Vorstartphase ausgeführt wird, der erste Versatzbetrag (VO) basierend auf dem Druckerfassungswert (VD), der nach einem vorherigen Einschalten der Zündung erfasst wird, bestimmt wird.

2. Steuervorrichtung nach Anspruch 1,
wobei der Steuerabschnitt (22) die erste Steuerung zu mindestens einem Zeitpunkt in der Vorstartphase vor dem Start einer Antriebsquelle (11) des Spreizsitzfahrzeugs (1) ausführt.

3. Steuervorrichtung nach Anspruch 1,
wobei der Steuerabschnitt (22) den ersten Versatzbetrag (VO) in der ersten Steuerung, die in der Vorstartphase ausgeführt wird, auf einen oberen Grenzwert (LU) oder einen niedrigeren Wert begrenzt.

4. Steuervorrichtung nach Anspruch 1,
wobei in der Vorstartphase, wenn die Stabilitätsinformationen des nach einem vorherigen Einschalten der Zündung erfassten Druckerfassungswerts (VD) eine Stabilität angeben, die höher als ein Referenzwert ist, der Steuerabschnitt (22) eine zweite Steuerung ausführt, um den Betrieb der Bremsleuchte (14) basierend auf dem Druckerfassungswert (VD) oder basierend auf einem zweiten Druckkorrekturwert zu steuern, der ein Wert ist, der durch Subtrahieren eines zweiten Versatzbetrags, der kleiner als der erste Versatzbetrag (VO) ist, von dem Druckerfassungswert (VD) erhalten wird.

5. Steuervorrichtung nach Anspruch 1,
wobei der Steuerabschnitt (22) den ersten Versatzbetrag (VO) bei den ersten Steuerungen, die zu mindestens zwei Zeitpunkten in der Vorstartphase ausgeführt werden, unterschiedlich einstellt.

6. Steuervorrichtung nach Anspruch 1,
wobei der Steuerabschnitt (22) auch die erste Steuerung zu mindestens einem Zeitpunkt in der Startphase ausführt.

7. Steuervorrichtung nach Anspruch 6,
wobei der Steuerabschnitt (22) den ersten Versatzbetrag (VO) bei der in der Vorstartphase ausgeführten ersten Steuerung und der in der Startphase ausgeführten ersten Steuerung unterschiedlich einstellt.

8. Steuervorrichtung nach Anspruch 6,
wobei der Steuerabschnitt (22) den ersten Versatzbetrag (VO) auf einen oberen Grenzwert (LU) oder einen niedrigeren Wert begrenzt und den oberen Grenzwert (LU) bei der in der Vorstartphase ausgeführten ersten Steuerung und der in der Startphase ausgeführten ersten Steuerung unterschiedlich einstellt.

9. Steuervorrichtung nach Anspruch 6,
wobei der Steuerabschnitt (22) bewirkt, dass der erste Versatzbetrag (VO) dem Druckerfassungswert (VD) in der ersten Steuerung folgt, und das Folgevermögen des ersten Versatzbetrags (VO) in Bezug auf den Druckerfassungswert (VD) bei der in der Vorstartphase ausgeführten ersten Steuerung und der in der Startphase ausgeführten ersten Steuerung unterschiedlich einstellt.

10. Steuervorrichtung nach einem der Ansprüche 1 bis 9,
wobei der Steuerabschnitt (22) die Bremsleuchte (14) zu mindestens einem Zeitpunkt in der Vorstartphase in einen leuchtenden Zustand versetzt, bevor der Betrieb der Bremsleuchte (14) durch die erste Steuerung gesteuert wird.

11. Steuervorrichtung nach einem der Ansprüche 1 bis 9,
wobei der Steuerabschnitt (22) die Bremsleuchte (14) zu mindestens einem Zeitpunkt in der Vorstartphase in einen nicht leuchtenden Zustand versetzt, bevor der Betrieb der Bremsleuchte (14) durch die erste Steuerung gesteuert wird.

12. Steuervorrichtung nach einem der Ansprüche 1 bis 9,
wobei der Steuerabschnitt (22) eine dritte Steuerung ausführt, um basierend auf einem dritten Druckkorrekturwert den Betrieb der Bremsleuchte (14) zu mindestens einem Zeitpunkt in der Vorstartphase zu steuern, bevor der Betrieb der Bremsleuchte (14) durch die erste Steuerung gesteuert wird, wobei der dritte Druckkorrekturwert ein Wert ist, der erhalten wird, indem ein dritter Versatzbetrag, der bestimmt wird, bevor die Zündung eingeschaltet wird, von dem Druckerfassungswert (VD) subtrahiert wird.

13. Steuerverfahren zum Steuern eines Betriebs einer Bremsleuchte (14) eines Spreizsitzfahrzeugs (1), wobei das Verfahren Folgendes umfasst:
Bewirken, dass ein Erfassungsabschnitt (21) einer Steuervorrichtung (20) einen Druckerfassungswert (VD) einer Bremsflüssigkeit des Spreizsitzfahrzeugs (1) erfasst; und
Bewirken, dass ein Steuerabschnitt (22) der Steuervorrichtung (20) den Betrieb der Bremsleuchte (14) steuert,
**gekennzeichnet durch** die Verfahrensschritte, bei denen der Steuerabschnitt (22) eine erste Steuerung ausführt, um den Betrieb der Bremsleuchte (14) in einer Vorstartphase, die sich vom Einschalten der Zündung des Spreizsitzfahrzeugs (1) bis zum Beginn einer Startphase des Spreizsitzfahrzeugs (1) erstreckt, basierend auf einem ersten Druckkorrekturwert (VC), der ein Wert ist, der durch Subtrahieren eines ersten Versatzbetrags (VO) von dem Druckerfassungswert (VD) erhalten wird, zu steuern, und
in der ersten Steuerung, die in der Vorstartphase ausgeführt wird, der erste Versatzbetrag (VO) basierend auf dem Druckerfassungswert (VD), der nach einem vorherigen Einschalten der Zündung erfasst wird, bestimmt wird.

## Revendications

1. Dispositif de commande (20) qui commande le fonctionnement d'un feu de frein (14) d'un véhicule à chevaucher (1), le dispositif comprenant :
une section d'acquisition (21) qui acquiert une valeur de détection de pression (VD) d'un liquide de frein du véhicule à chevaucher (1) ; et
une section de commande (22) qui commande le fonctionnement du feu de frein (14),
**caractérisé en ce que**
la section de commande (22) exécute une première commande pour commander le fonctionnement du feu de frein (14) durant une phase de pré-propulsion qui est une phase à partir du moment où un système d'allumage du véhicule à chevaucher (1) est activé jusqu'à ce qu'une phase de propulsion du véhicule à chevaucher (1) débute, sur la base d'une première valeur de correction de pression (VC) qui est une valeur obtenue en soustrayant une première quantité de décalage (VO) de la valeur de détection de pression (VD), et
dans la première commande exécutée durant la phase de pré-propulsion, la première quantité de décalage (VO) est déterminée sur la base de la valeur de détection de pression (VD) détectée après une activation précédente du système d'allumage.

2. Dispositif de commande selon la revendication 1,
dans lequel la section de commande (22) exécute la première commande à au moins un moment durant la phase de pré-propulsion avant le démarrage d'une source d'entraînement (11) du véhicule à chevaucher (1).

3. Dispositif de commande selon la revendication 1,
dans lequel la section de commande (22) limite la première quantité de décalage (VO) à une valeur limite supérieure (LU) ou moins dans la première commande exécutée dans la phase de pré-propulsion.

4. Dispositif de commande selon la revendication 1,
dans lequel, durant la phase de pré-propulsion, lorsqu'une information de stabilité de la valeur de détection de pression (VD) détectée après l'activation précédente du système d'allumage est une information indiquant une stabilité supérieure à une référence, la section de commande (22) exécute une deuxième commande pour commander le fonctionnement du feu de frein (14) sur la base de la valeur de détection de pression (VD) ou sur la base d'une deuxième valeur de correction de pression qui est une valeur obtenue en soustrayant une deuxième quantité de décalage, inférieure à la première quantité de décalage (VO), de la valeur de détection de pression (VD).

5. Dispositif de commande selon la revendication 1,
dans lequel la section de commande (22) définit la première quantité de décalage (VO) différemment entre les premières commandes exécutées à au moins deux moments durant la phase de pré-propulsion.

6. Dispositif de commande selon la revendication 1,
dans lequel la section de commande (22) exécute également la première commande à au moins un moment durant la phase de propulsion.

7. Dispositif de commande selon la revendication 6,
dans lequel la section de commande (22) définit la première quantité de décalage (VO) différemment entre la première commande exécutée durant la phase de pré-propulsion et la première commande exécutée durant la phase de propulsion.

8. Dispositif de commande selon la revendication 6,
dans lequel la section de commande (22) limite la première quantité de décalage (VO) à une valeur limite supérieure (LU) ou moins, et définit la valeur limite supérieure (LU) différemment entre la première commande exécutée durant la phase de pré-propulsion et la première commande exécutée durant la phase de propulsion.

9. Dispositif de commande selon la revendication 6,
dans lequel la section de commande (22) fait en sorte que la première quantité de décalage (VO) suive la valeur de détection de pression (VD) dans la première commande, et définit un degré de suivi de la première quantité de décalage (VO) par rapport à la valeur de détection de pression (VD) différemment entre la première commande exécutée durant la phase de pré-propulsion et la première commande exécutée durant la phase de propulsion.

10. Dispositif de commande selon l'une quelconque des revendications 1 à 9,
dans lequel la section de commande (22) met le feu de frein (14) dans un état allumé à au moins un moment durant la phase de pré-propulsion avant que le fonctionnement du feu de frein (14) ne soit commandé par la première commande.

11. Dispositif de commande selon l'une quelconque des revendications 1 à 9,
dans lequel la section de commande (22) met le feu de frein (14) dans un état éteint à au moins un moment durant la phase de pré-propulsion avant que le fonctionnement du feu de frein (14) ne soit commandé par la première commande.

12. Dispositif de commande selon l'une quelconque des revendications 1 à 9,
dans lequel la section de commande (22) exécute une troisième commande pour commander le fonctionnement du feu de frein (14) à au moins un moment durant la phase de pré-propulsion avant que le fonctionnement du feu de frein (14) ne soit commandé par la première commande, sur la base d'une troisième valeur de correction de pression qui est une valeur obtenue en soustrayant une troisième quantité de décalage, déterminée avant l'activation du système d'allumage, de la valeur de détection de pression (VD).

13. Procédé de commande pour commander le fonctionnement d'un feu de frein (14) d'un véhicule à chevaucher (1), le procédé comprenant :
amener une section d'acquisition (21) d'un dispositif de commande (20) à acquérir une valeur de détection de pression (VD) d'un liquide de frein du véhicule à chevaucher (1) ; et
amener une section de commande (22) du dispositif de commande (20) à commander le fonctionnement du feu de frein (14),
**caractérisé par** les étapes de procédé durant lesquelles la section de commande (22) exécute une première commande pour commander le fonctionnement du feu de frein (14) durant une phase de pré-propulsion qui est une phase à partir du moment où un système d'allumage du véhicule à chevaucher (1) est activé jusqu'à ce qu'une phase de propulsion du véhicule à chevaucher (1) débute, sur la base d'une première valeur de correction de pression (VC) qui est une valeur obtenue en soustrayant une première quantité de décalage (VO) de la valeur de détection de pression (VD), et
dans la première commande exécutée durant la phase de pré-propulsion, la première quantité de décalage (VO) est déterminée sur la base de la valeur de détection de pression (VD) détectée après une activation précédente du système d'allumage.
